# EUROPÄISCHE PATENTANMELDUNG

(11) **EP 1 155 906 A2**
(43) Veröffentlichungstag der Anmeldung: **21.11.2001**
(21) Anmeldenummer: 00117894.6
(22) Anmeldetag: 19.08.2000
(51) Int. Cl.: B60P 3/20

(54) **Nahtlose Innenverkleidung aus PU, inbesondere für Frischdienst- oder Kühltahrzeuge**

(30) Priorität: 16.05.2000 DE 10023975
(71) Anmelder: Kerstner, Ralph, 65824 Schwalbach (DE)
(72) Erfinder: Kerstner, Ralph, 65824 Schwalbach (DE)

(57) **Zusammenfassung**

Nahtlose Innenverkleidung (1) eines Kühlfahrzeuges aus auf eine Form (5) aufgespritztem PU-Material. Die Form (5) wird unter Zuhilfenahme eines Serientransportfahrzeuges hergestellt, z.B. aus Werkzeugbau-Polyester oder Epoxydharz, vgl. Fig.1.und Fig.2.

## Beschreibung

Die Erfindung betrifft eine nahtlose Innenverkleidung aus PU (Polyurethan), insbesondere für Frischdienst- oder Kühlfahrzeuge, welche vorzugsweise nachträglich von einem Serieentransportfahrzeug in ein gegen Kälteverlust isoliertes Frischdienst- oder Kühlfahrzeug umgebaut werden und vorzugsweise mindestens teilweise eine auf dem Fahrzeugdach montierte mechanische Kühleirichtung aufweisen.

Bei derartigen Kühlfahrzeugen wird nach dem heutigen Stand der Technik die Inneneinrichtung des Serientransportfahrzeuges entfernt und danach werden sämtliche Innenwände mit einer Isolierung versehen.

In der Regel wird der Boden wegen der Belastung durch Begehung oder durch Transportbehälter aus Metall, vorzugsweise aus Aluminium gefertigt, es sind aber auch Isolierungen des Bodens bekannt, welche mit Kunststoff abgedeckt sind. Dabei hat die Abdeckung der Bodenisolierung meist die Form einer Bodenwanne, deren Seitenwände etwas höher nach oben reichen als die Radkästen.

Anschliessend müssen die Berührungskanten zwischen der Decke und den Seitenwänden, der Decke und der Stirnwand, sowie zwischen den beiden Seitenwänden abgedichtet und mit einer mehr oder weniger ansehnlichen Eckenauskleidung versehen werden. Dies ist nicht nur sehr aufwendig, sondern gibt auch immer wieder Anlass zu Beschädigungen z.B. beim Reinigen und Ausspritzen des Fahrzeuges. Es ist noch anzumerken, dass die Isolierteile für die Seitenwände, die Stirnwand und die Fahrzeugdecke sandwichartig aufgebaut sind und an der dem Fahrzeuginneren zugewendeten Seite aus einem glatten Kunststoff bestehen. Dies ist der allgemeine Stand der Technik.

Es ist nun die Aufgabe der vorliegenden Erfindung, sämtliche Berührungsstellen zwischen den Seitenwänden und der Stirnwand, sowie zwischen den Seitenwänden, der Stirnwand und der Decke an der Innenseite des Fahrzeugs zu vermeiden und dafür eine nahtlose und stabile Innenauskleidung herzustellen.

Diese Innenauskleidung besteht gemäss der Erfindung aus Polyurethan (PU), welche dadurch hergestellt wird, dass PU der gewünschten Farbe und der gewünschten Elastizität in einer festgelegten Schichtdicke auf eine Form aufgespritzt wird, wobei die Aussenseite dieser Form genau der Form der Innenwände des Kühlfahrzeugs entspricht.

Da beim Aufspritzen der PU-Schicht auf die Form in einigen Sekunden immer nur ein kleiner, etwa handtellergrosser Bereich bedeckt wird und das Material bereits nach 6 sec aushärtet, spielt ein Schrumpfen keine Rolle, denn wenn die nächste Stelle an einen eben bespritzten Bereich angefügt wird (wobei die Randzonen immer ineinander übergehen), ist ist der bereits aufgespritzte Bereich schon ausgehärtrt.

Das auf die Form aufzuspritzende PU-Material ist in einer vorher eingestellten Weise elastisch, es kann nämlich zwischen sehr elastisch und hart eingestellt werden. Ausserdem ist bei diesem Material auch bei ganz scharfem Abknicken kein sogen. "Weissbruch" feststellbar. Nach dem Aufspritzen des PU-Materials in einer Schichtdicke von vorzugsweise 1,5 bis 4,0 mm auf die Form wird es von dieser gelöst. Das Ablösen der PU-Schicht wird dadurch erleichtert, dass vor dem Aufbringen des PU-Materials ein Trennmittel auf die Form aufgespritzt wurde.

Die elastische nahtlose Innenhaut des Kühlfahrzeuges kann nun in das bereits isolierte und mit einer vorzugsweise aus Metall bestehenden Bodenwanne versehene Fahrzeug eingebracht werden und mittels einer Klebeverbindung mit der Innenseite der Fahrzeugisolierung derart verbunden werden, dass die Innenhaut den oberen Rand der Bodenwanne überdeckt. Dieser Randbereich kann dann in an sich bekannter Weise mit einer Abdeckleiste aus Metall oder Kunststoff verkleidet werden. Der Überstand der Innenhaut über den Rand der Bodenwanne hängt dabei von der Konstruktion der gewählten Abdeckleiste ab. Der Abschluss der nahtlosen Innenhaut im Bereich der Hecktür und einer seitlichen Schiebetür kann ohne Weiteres nach einer der bisher bekannten Weisen vorgenommen werden.

Die Herstellung der Form macht es erforderlich, einmalig bei einem Fahrzeug desjenigen Typs, der später in grossen Stückzahlen in ein gekühltes Fahrzeug umgebaut werden soll, den Aufbau der Karosserie in dem Bereich, in welchem die Form entstehen soll, von der Aussenseite her zu öffnen, um die nach den baulichen Einzelheiten dieses Fahrzeuges entstandene Form aus diesem entnehmen zu können.

Zur Herstellung der Form wird der Aufbau vollständig an den Seiten, der Decke und der Stirnwand isoliert und zwar derart, dass die Dicke der Isolierung um die vorgesehene Dicke der späteren Innenhaut aus PU erhöht wird. Anschliessend wird die Innenseite dieser Isolierung erforderlichenfalls etwas überarbeitet und mit einem Trennmittel versehen.

Nunmehr beginnt die Herstellung der eigentlichen Form. Hierzu wird das Material, aus dem die Form bestehen soll, vorzugsweise Werkzeugbau-Polyester oder Epoxydharz, von innen auf die isolierten und mit einem Trennmittel bedeckten Wandteile aufgespritzt.

Die Material-Auftragung erfolgt solange, bis die vorgesehene Schichtdicke erreicht worden ist.Vorzugsweise liegt diese Schichtdicke zwischen 5 und 10 cm. Die hier genannten Materialien haben ein derart geringes Schwindmass, dass es hier vernachlässigbar bleibt. Diese Formwände werden vor und nach dem Aushärten im Inneren noch mit einer ausreichenden Anzahl von versteifenden Verstrebungen, vorzugsweise aus Metall, versehen. Nunmehr kann der Teil der Fahrzeugkarosserie soweit in Teile zerschnitten und von der Form gelöst werden, dass diese aus dem Fahrzeug herausgenommen werden kann. Die Form kann auch so gestaltet sein, dass der in der Regel rechteckig geformte, in den Kühlraum hineinragende Teil der Verdampferverkleidung mit Lufteinlass- und Luftausblasöffnungen im Deckenbereich an der Innenhaut bereits mit angeformt ist.Es ist für die Herstellung derartiger nahtlosen Innenverkleidungen von grossem Vorteil, wenn die PU-Schicht nicht von Hand, sondern von einem Spritzroboter aufgespritzt wird.

Das Aufspritzen des PU-Materials wird besonders vorteilhaft derart durchgeführt, dass beim Spritzen einer Aussenschicht, welche später mit der Fahrzeugisolierung zu verkleben ist, in der Spritzdüse bereits kleinzerhacktes Glasfasermaterial beigemischt wird, sodass die im Kühlfahrzeug zu verklebende Seite durch den Glasfaseranteil eine gewisse Rauheit der Oberfläche aufweist.

In den Zeichnungen sind Ausführungsbeispiele des Erfindungsgegenstandes schematisch dargestellt. Es zeigen:
- Fig.1:: Eine nahtlose, aus einem Stück hergestellte Innenverkleidung gemäss der Erfindung, wobei diese Innenverkleidung, da sie eine voreingestellte Elastizität aufweist, nicht so wie dargestellt selbständig stehen könnte; die Darstellung zeigt vielmehr eine solche Innenverkleidung, wie sie in eingebauten Zustand aussieht.
- Fig.2:: Eine Form zum Aufspritzen des PU-Materials.
- Fig.3:: Eine Art der Herstellung der Form zum Aufspritzen des PU-Materials.
- Fig.4:: Ein Kühlfahrzeug, bei dem die Schnittlinien zum Abtrennen und Entfernen des Karosserieaussenbleches angedeutet sind.
- Fig.5:: Ein Kühlfahrzeug im schematischen Querschnitt, bei dem die PU-Innenverkleidung angebracht ist.

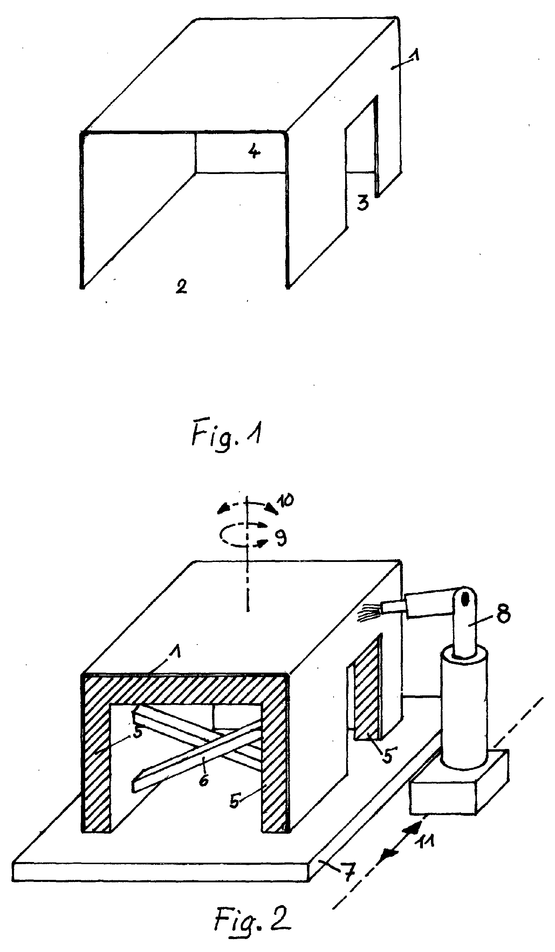

Fig. 1 zeigt eine elastische Innenverkleidung (1). Bei (2) ist die Hecktür, bei (3) eine Öffnung für eine seitliche Schiebetür und bei (4) die Stirnwand angeordnet.

Fig.2 zeigt den grundsätzlichen Aufbau einer Form zur Herstellung der Innenverkleidung nach Fig.1. Diese Innenverkleidung (1) wird hier von einem Spritzroboter (8) auf die eigentliche Form (5) in einer voreingestellten Schichtdicke, welche vorzugsweise zwischen 1,5 und 4,0 mm liegt, aufgespritzt. Die Form (5) besteht vorzugsweise aus Werkzeugbau-Polyester oder Epoxydharz und ist innen mit Verstrebungen (6), welche vorzugsweise aus Metall bestehen, verstärkt. Diese Form ist bei (2) offen, da hier die Hecktür des Kühlfahrzeuges angeordnet ist. Bei (3) ist hier eine weitere Öffnung vorhanen für eine seitliche Tür, welche meistens als Schiebetür ausgebildet ist. Diese Öffnung entfällt natürlich, wenn das Kühlfahrzeug keine Seitentür hat. Die Schmalseite (4) ist als Stirnwand wieder nahtlos geschlossen. Die Form (5) kann z.B. auf einer stabilen Bodenplatte (7) montiert sein, welche um eine vertikale Achse (9) horizontal gedreht werden kann. Es ist weiterhin sehr vorteilhaft wenn, wie mit (10) angedeutet, auch eine gewisse Neigung nach zwei Seiten möglich ist. Der Spritzroboter (8) ist zweckmässig längs einer Linie (11) bewegbar.

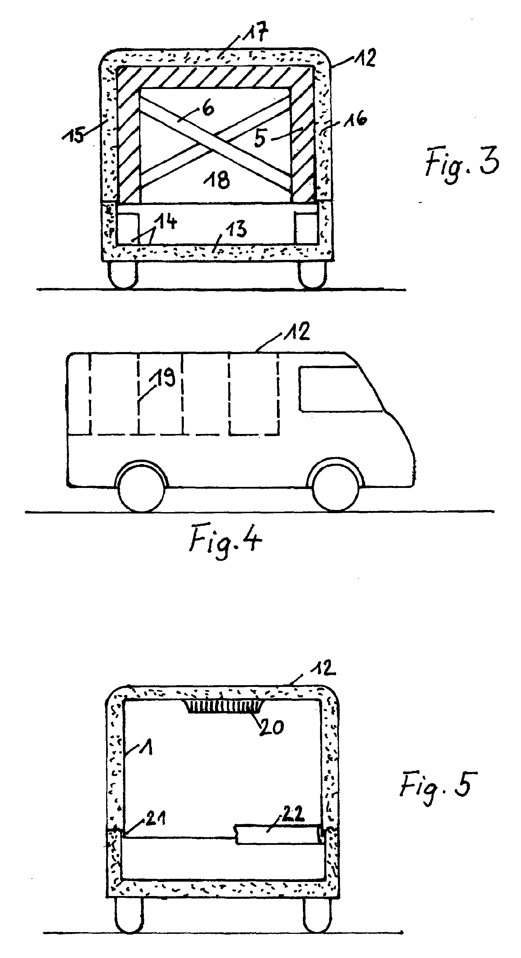

In Fig.3 ist die Herstellung der Form (5,6) dargestellt. Sie zeigt einen schematischen Querschnitt durch den Kühlraum eines Kühlfahrzeuges. Mit (12) ist die Aussenwand des serienmässigen Transportfahrzeuges dargestellt, in das die Bodenisolierung (13) und die Bodenwanne (14) eingesetzt sind. (15) und (16) zeigen die Isolierungen der Seitenwände und mit (17) ist die Isolierung der Decke bezeichnet. Auch die Stirnwand (18) ist voll isoliert. In den Bereich der Isolierungen (15,16,17,18) wird nun dasjenige Material von Innen in der gewünschten Wanddicke aufgespritzt, aus dem die Form (5) bestehen soll. Vorher wurde jedoch ein Trennmittel auf die Isolierung gespritzt, welche in ihrer Dicke um die Dicke der PU-Innenverkleidung (1) vergrössert ist. Wenn das Formmaterial welches noch mit Metallteilen (6) verstärkt und abgestützt worden ist, ausgehätet ist, wird die Aussenwand (12) zusammen mit der Isolierung der Bereiche (15,16,17,18), wie in Fig.4 dargestellt entlang von Schnittlinien (19) aufgeschnitten und entfernt. Fig. 5 zeigt dann den Einbau einer auf der Form (5) hergestellten, nahtlosen Innverkleidung (1) in ein isoliertes Kühlfahrzeug, wobei die in den Kühlraum hineinragende Verdampferverkleidung (20) ebenfalls nahtlos an die Innenverkleidung angeformt sein kann. Die überlappende Verbindung (21), wobei die Innenverkleidung (1) den oberen Rand der Bodenwanne (14) von der Kühlraumseite her überdeckt, wird in an sich bekannter Weise mit einer Abdeckleiste (22) aus Metall oder Kunststoff verkleidet.

## Patentansprüche

1. Innenverkleidung für ein isoliertes Kühlfahrzeug, **dadurch gekennzeichnet, dass** diese Innenverkleidung (1) nahtlos, vorzugsweise aus PU (Polyurethan)-Material hergestellt ist.

2. Innenverkleidung nach Anspruch 1, **dadurch gekennzeichnet, dass** das PU-Material nahtlos auf eine Form (5), welche vorher mit einem Trennmittel versehen worden ist, in einer vorher festgelegten Schichtdicke, welche vorzugsweise zwischen 1,5 und 4,0 mm liegt, aufgespritzt wird.

3. Innenverkleidung nach den Ansprüchen 1 und 2, **dadurch gekennzeichnet, dass** das zwischen "weich" und "hart" einstellbare PU-Material auf eine vorher festgelegte Elastizität eingestellt ist.

4. Innenverkleidung nach den Ansprüchen 1 bis 3, **dadurch gekennzeichnet, dass** das Material, aus welchem die Form (5) hergestellt ist, vorzugsweise Werkzeugbau-Polyester oder Epoxydharz ist.

5. Innenverkleidung nach den Ansprüchen 1 bis 4, **dadurch gekennzeichnet, dass** zur Herstellung der Form (5) einmalig ein Serientransportfahrzeug derart isoliert wird, (vgl. Fig.3), dass die Dicke der Isolierung (15,16,17,18) um die Dicke der Innenverkleidung (1) vergrössert und mit einem Trennmittel versersehen ist.

6. Innenverkleidung nach den Ansprüchen 1 bis 5, **dadurch gekennzeichnet, dass** die Schichtdicke des Materials, aus dem die Form (5) besteht, vorzugsweise zwischen 5,0 und 10,0 cm liegt.

7. Innenverkleidung nach den Ansprüchen 1 bis 6, **dadurch gekennzeichnet, dass** in das gemäss Anspruch 5 isolierte Serientransportfahrzeug das Material, aus dem die Form (5) bestehen soll, in einer vorgegebenen Schichtdicke von der Innenseite her eingespritzt und mit Verstrebungen (6), welche vorzugsweise aus Metall bestehen, verstärkt ist.

8. Innenverkleidung nach den Ansprüchen 1 bis 7, **dadurch gekennzeichnet, dass** die Form (5) nach dem Aushärten des Formmaterials derart aus dem Serientransportfahrzeug entnommen wird, dass bei diesem entlang von Schnittlinien (19) die Aussenseite des Fahrzeugs zusammen mit der nach Anspruch 5 hergestellten Isolierung im Bereich (15,16,17,18) aufgeschnitten und entfernt ist.

9. Innenverkleidung nach den Ansprüchen 1 bis 8, **dadurch gekennzeichnet, dass** die Form (5) auf eine stabile Bodenplatte (7) montiert ist, welche um eine vertikale Achse (9) drehbar und nach den Seiten (10) neigbar ist.

10. Innenverkleidung nach den Ansprüchen 1 bis 10, **dadurch gekennzeichnet, dass** zum Aufspritzen des PU-Materials für die nahtlose Innenverkleidung (1) ein Spritzroboter verwendet wird, welcher auch längs einer Linie (11) seitwärts bewegbar ist.

11. Innenverkleidung nach den Ansprüchen 1 bis 10, **dadurch gekennzeichnet, dass** der in den Kühlraum hineinragende Teil (20) der Verdampferverkleidung nahtlos an die Innenverkleidung (1) angeformt ist.
